# EUROPEAN PATENT SPECIFICATION

(11) **EP 2 482 751 B1**
(45) Date of publication and mention of the grant of the patent: **19.07.2023**
(21) Application number: 10765891.6
(22) Date of filing: 01.10.2010
(51) Int. Cl.: A61C 1/18, A61C 17/00

(54) **DENTAL DEVICE ADAPTER SYSTEM, DENTAL SYSTEM, AND METHOD OF OPERATING A DENTAL SYSTEM**
ADAPTERSYSTEM FÜR EINE DENTALE VORRICHTUNG, DENTALSYSTEM UND VERFAHREN FÜR DEN BETRIEB EINES DENTALSYSTEMS
SYSTÈME D'ADAPTATEUR DE DISPOSITIF DENTAIRE, SYSTÈME DENTAIRE ET PROCÉDÉ D'ACTIONNEMENT D'UN SYSTÈME DENTAIRE

(30) Priority: 02.10.2009 US 248117 P; 09.04.2010 US 322402 P
(43) Date of publication of application: 08.08.2012
(73) Proprietor: DENTSPLY SIRONA Inc., York, PA 17401-2991 (US)
(72) Inventor: CHRONISTER, Benjamin, York PA 17406 (US); KILE, Jeremy, York PA 17402 (US)
(74) Representative: Hartz, Nikolai
(86) International application number: PCT/US2010/051055
(87) International publication number: WO 2011/041636

(56) References cited:
- US-A- 4 504 227
- US-A1- 2008 220 392
- US-A1- 2009 162 811
- US-B1- 6 168 433

## Description

### FIELD OF THE INVENTION

The present invention is directed to dental devices. More particularly, the invention relates to adapters for connecting a dental device and a dental handpiece.

### BACKGROUND OF THE INVENTION

US 2008/0220392 A1 discloses an adapter to connect a prophylaxis angle to a drive source, wherein the adapter comprises a collet, a nose, a body and a shaft. However, no adapter system comprising two or more adapters is disclosed. US 6 168 433 B1 discloses a disposable prophylaxis angle. However, no adapter is disclosed. US 4 504 227 A discloses a dental handpiece set comprising a handpiece housing, a power supply module detachably coupled to one end of the handpiece housing, means to mount a motor unit inside the handpiece housing and a drive train extending within the handpiece housing to drive a dental implement. However, no adapter system comprising two or more adapters is disclosed.

Generally, dental devices are exposed to undesirable substances and contaminants including, but not limited to, plaque, blood, saliva, and/or paste. Sterilizing and/or disinfecting dental devices can result in down-time for clinicians.

To reduce or eliminate down-time, modular dental devices can be utilized. Modular dental devices can include a dental prophylaxis angle (DPA) capable of being connected to a dental handpiece. The DPA can be disassembled and discarded or sterilized while the dental handpiece is more frequently used. Since there is no industry standard, these dental handpieces have interfaces that are compatible with the interfaces of certain DPAs. However, due to the various DPA designs and handpiece designs, a dental handpiece can include a geometry incompatible with the geometry of another DPA. This can result in the clinician being unable to utilize DPAs having incompatible geometries with certain handpieces that provide other benefits such as improved stability and/or other improvements. Furthermore, using multiple dental devices including incompatible geometry can require the clinician to use multiple handpieces.

Therefore, what is needed are a dental system and method of operating a dental system having a dental device adapter system for connecting dental handpieces and dental devices.

### SUMMARY OF THE INVENTION

The present invention relates to the subject matter of claims 1 to 12. Also disclosed herein is a dental device adapter system for a dental system including a first adapter configured to engage a dental device having a first geometry and a first rotatable component, and a second adapter configured to engage a dental handpiece having a second geometry and a second rotatable component. The first adapter being engaged with the dental device and the second adapter being engaged with the dental handpiece permits rotation of the second rotatable component to rotate the first rotatable component.

According to another aspect disclosed herein, a dental system includes a dental prophylaxis angle, a dental handpiece, and a dental device adapter system. The dental device adapter system includes a first adapter configured to engage a dental prophylaxis angle having a first geometry and a first rotatable component, and a second adapter configured to engage the dental handpiece having a second geometry and a second rotatable component. The first adapter being engaged with the dental prophylaxis angle and the second adapter being engaged with the dental handpiece permits rotation of the second rotatable component to rotate the first rotatable component.

According to yet another aspect disclosed herein, a method of operating a dental system having a dental prophylaxis angle, a dental handpiece, and a dental device adapter system includes providing the dental device adapter system and rotating the second rotatable component thereby rotating the first rotatable component. The dental device adapter system includes a first adapter configured to engage the dental prophylaxis angle having a first geometry and a first rotatable component, and a second adapter configured to engage the dental handpiece having a second geometry and a second rotatable component. The first adapter is engaged with the dental prophylaxis angle and the second adapter is engaged with the dental handpiece.

Further aspects of the method and system are disclosed herein. The features and advantages of the present invention will be appreciated and understood by those skilled in the art from the following detailed description and drawings.

### BRIEF DESCRIPTION OF THE DRAWINGS

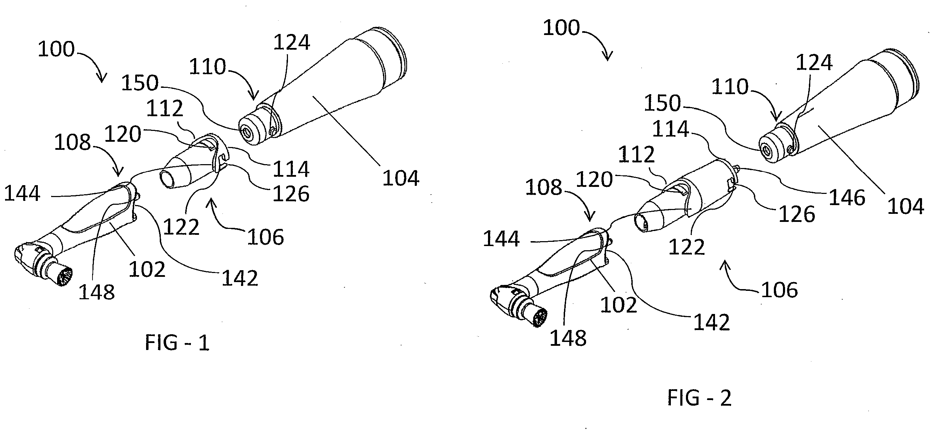

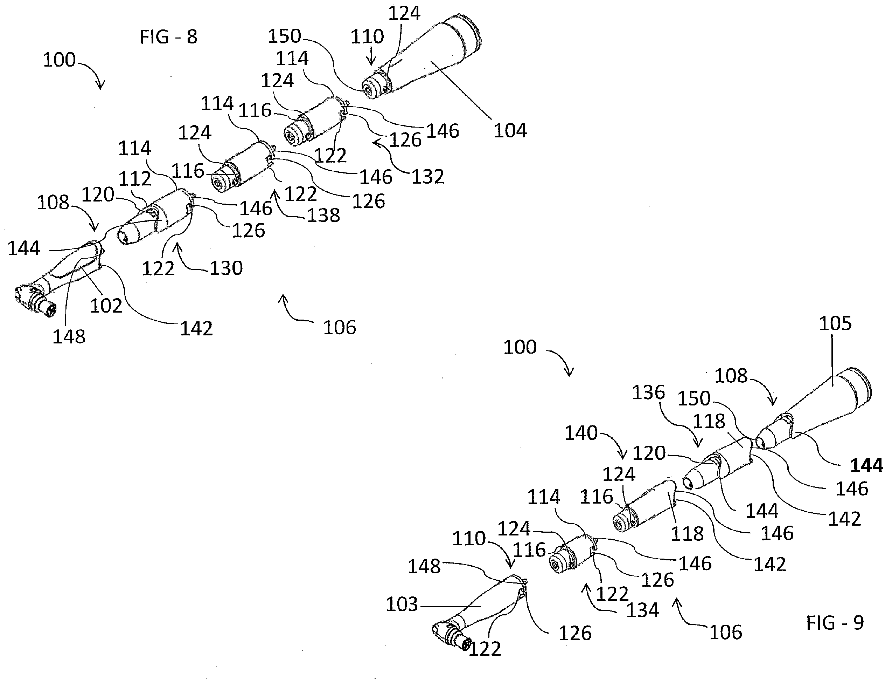

FIGS. 1 to 7 show aspects disclosed herein for a dental system having a dental device adapter system. FIGS. 8 and 9 show embodiments according to the present invention.

Wherever possible, the same reference numbers will be used throughout the drawings to represent the same parts.

### DETAILED DESCRIPTION OF THE INVENTION

The present invention now will be described more fully hereinafter with reference to the accompanying drawings, in which an exemplary embodiment of the invention is shown. The present invention may, however, be embodied in many different forms and should not be construed as limited to the embodiments set forth herein.

Provided is a dental system and method of operating a dental system having a dental device adapter system for connecting dental handpieces and dental prophylaxis angles. In exemplary embodiments of the invention, the dental device adapter system permits clinicians to use multiple dental pophylaxis angles with a single dental handpiece, multiple dental handpieces with a single dental prophylaxis angle, dental prophylaxis angles incompatible with dental handpieces, and/or increased modularity. For example, exemplary embodiments of the present invention permit clinicians to use multiple styles of a dental prophylaxis angle (DPA) with a single dental handpiece. Also, exemplary embodiments of the present invention permit clinicians to use multiple styles of the handpiece with a single DPA.

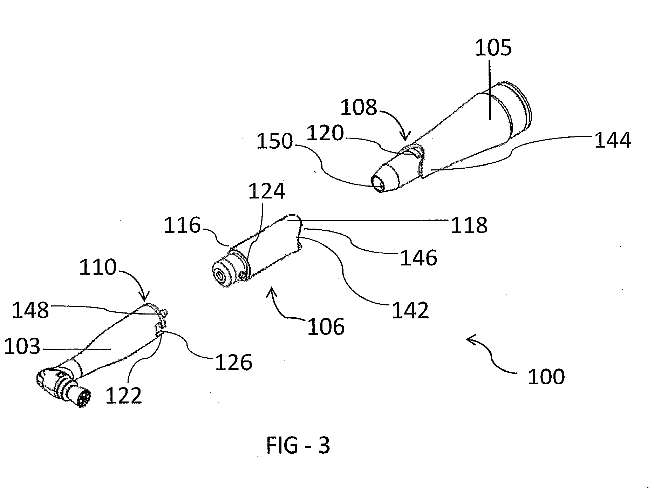

FIGS. 1 to 7 show alternate views of aspects disclosed herein. FIGS. 8 and 9 embodiments of dental system 100. Each system 100 comprises a DPA, a dental handpiece, and a dental device adapter system 106. In one embodiment, the dental prophylaxis angle (DPA) may be DPA 102 (shown in FIG. 1), as disclosed in U.S. Patent Application No. 12/004,145, December 20, 2007, entitled "DENTAL PROPHYLAXIS ANGLE AND HANDPIECE ASSEMBLY," In another embodiment, the DPA may be DPA 103, as shown in FIG. 3. In one embodiment, the dental handpiece may be dental handpiece 104, as disclosed in U.S. Patent Application No. 12/004,145. In another embodiment, the dental handpiece may be dental handpiece 105, as shown in FIG. 3. Dental device adapter system 106 permits use of DPA 102 or DPA 103 to be used with dental handpiece 104 or dental handpiece 105. As will be appreciated, engagement features (for example, male parts and female parts) may be reversed in any suitable manner. For example, although the dental handpiece is shown and described as including a female engagement feature, a male engagement feature may be used. Thus, the DPA(s), the dental handpiece(s), the adapter(s), or other suitable portions of dental system 100 may be engaged by any suitable engagement features.

Dental device adapter system 106 can be of any suitable material, for example polymeric, metal, or composite. Dental device adapter system 106 may include any suitable features for operably connecting the dental handpiece to the DPA. As shown in FIGS. 8 and 9, dental device adapter system 106 may include a drive shaft 146 (or other suitable rotatable component) configured to engage a DPA drive shaft 148 (or other suitable rotatable component). Additionally or alternatively, as shown in FIGS. 8 and 9, dental device adapter system 106 may include a drive shaft 146 (or other suitable rotatable component) configured to engage a handpiece drive shaft 150 (or other suitable rotatable component).

In one embodiment, dental device adapter system 106 may be disassembled from the dental handpiece and/or from the DPA and autoclaved. In another embodiment, dental device adapter system 106 may include disposable parts or be entirely disposable. Dental device adapter system 106 can include a first portion 112 configured to detachably engage the DPA and a second portion 114 configured to detachably engage the dental handpiece 104. Dental device adapter system 106 can be attached to either the dental handpiece 104 or the DPA first.

The dental handpiece and/or the DPA can include alignment features for substantially permanent engagement or detachable engagement with one another (see FIGS. 8 and 9). Alignment features can be included on an exterior portion of the dental handpiece and/or the DPA and/or on an interior portion of the dental handpiece and/or the DPA. For example, the alignment features may include two or more recesses 142 corresponding to protrusions 144 (see FIG. 8 and 9) or a feature 124 corresponding to a notch interface 122 and a notch 126 (see FIG. 8 and 9). Alternatively, the dental handpiece and the DPA may be incompatible. For example, the dental handpiece may include a first geometry 108 and the DPA may include a second geometry 110, the first geometry being incompatible with the second geometry. Likewise, the dental handpiece and the DPA may include alignment features that are incompatible.

Dental device adapter system 106 may connect any suitable DPA to any suitable dental handpiece despite the DPA and the dental handpiece being incompatible. Referring to FIGS. 1-2, in one aspect disclosed herein, dental device adapter system 106 can connect DPA 102 having a first geometry 108 (for example, a swoop-like shape) or interface with dental handpiece 104 having a second geometry 110 (for example, a ring-like shape) or interface despite DPA 102 and dental handpiece 104 being incompatible. In the aspect disclosed herein, dental device adapter system 106 includes first portion 112 configured to detachably engage DPA 102 and second portion 114 configured to detachably engage dental handpiece 104. First portion 112 includes protrusions 144 for engaging recesses 142 of DPA 102. Second portion 114 includes notch interface 122 and notch 126 for engaging feature 124 of dental handpiece 104. In a further aspect disclosed herein, dental device adapter system 106 may be formed by two separate adapters. Any suitable combination of separate adapters may be used to form dental device adapter system 106. For example, one adapter may be a sheath and the other adapter may be a shaft extender having a tube on one end for engaging DPA drive shaft 148 and a shaft on the other end for engaging the dental handpiece. Additionally or alternatively, the shaft in the DPA drive shaft 148 may be configured to extend all the way through the adapter(s).

Referring to FIG. 3, in another aspect disclosed herein, dental device adapter system 106 can connect DPA 103 having second geometry 110 (the ring-like shape) with dental handpiece 105 having first geometry 108 (the swoop-like shape) despite DPA 103 and dental handpiece 105 being incompatible. In the aspect disclosed herein, dental device adapter system 106 includes first portion 116 configured to detachably engage DPA 103 and second portion 118 configured to detachably engage dental handpiece 105. First portion 116 includes feature 124 for engaging notch interface 122 and notch 126 of DPA 103. Second portion 118 includes recesses 142 for engaging protrusions 144 of dental handpiece 105.

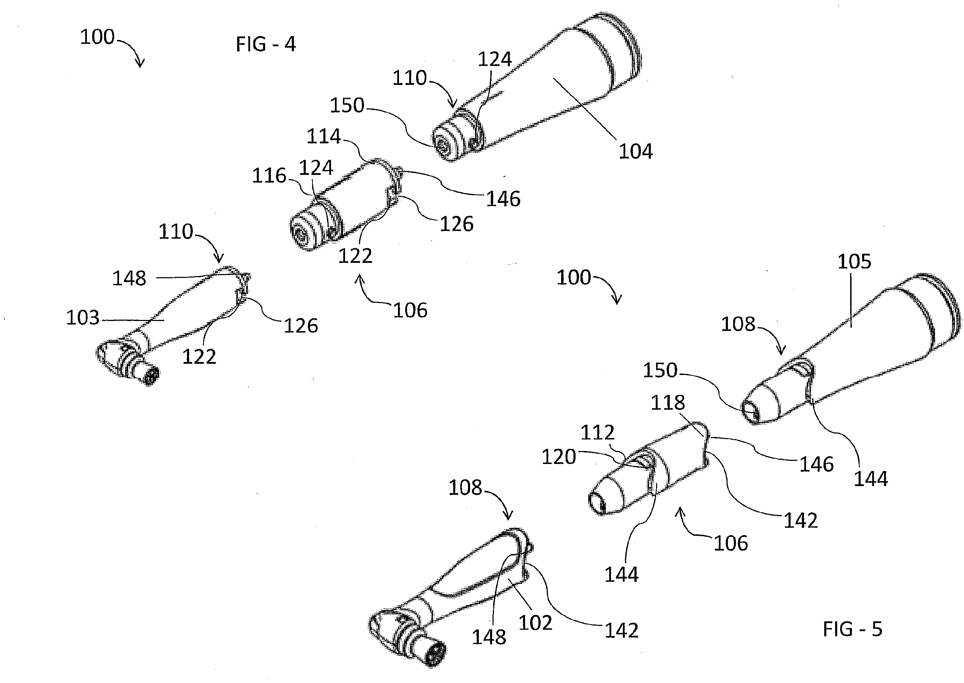

Dental device adapter system 106 may connect compatible DPAs and dental handpieces, thereby extending the length of system 100. Referring to FIG. 4, in another aspect disclosed herein, dental device adapter system 106 can connect DPA 103 having the second geometry 110 (for example, the ring-like shape) with dental handpiece 104 having a second geometry 110 (for example, a ring-like shape). In the embodiment, dental device adapter system 106 includes first portion 116 configured to detachably engage DPA 103 and second portion 114 configured to detachably engage dental handpiece 104. First portion 116 includes feature 124 for engaging notch interface 122 and notch 126 of DPA 103. Second portion 114 includes notch interface 122 and notch 126 for engaging feature 124 of dental handpiece 104.

Referring to FIG. 5, in one aspect disclosed herein, dental device adapter system 106 can connect DPA 102 having first geometry 108 (the swoop-like shape) with dental handpiece 105 having first geometry 108 (the swoop-like shape). In the embodiment, dental device adapter system 106 includes first portion 112 configured to detachably engage DPA 102 and second portion 118 configured to detachably engage dental handpiece 105. First portion 112 includes protrusions 144 for engaging recesses 142 of DPA 102. Second portion 118 includes recesses 142 for engaging protrusions 144 of dental handpiece 105.

Dental device adapter system 106 may include any suitable securing mechanism for releasably securing dental device adapter system 106 to the DPA. For example, dental device adapter system 106 may include one or more tabs 120 forming a friction or interference fit between dental device adapter system 106 and DPA 102 (see FIG. 8). Alternatively, dental device adapter system 106 may include notch interface 122 or bayonet style interface for securing dental device adapter system 106 to DPA 103 (see FIG. 9). For example, interface 122 may be configured to engage feature 124 on DPA 103 by notch 126 being inserted into feature 124 and rotated. In one embodiment, the interface may be engaged without rotation of the notch in the feature. Other suitable connection methods and/or connection mechanisms may be used as the securing mechanism. For example, pads, ribs portions, threads, springs, buttons, temporary adhesive, and/or combinations thereof may secure dental device adapter system 106 to the DPA.

Dental device adapter system 106 may include any suitable securing mechanism for releasably securing dental device adapter system 106 to the dental handpiece. For example, dental device adapter system 106 may be engaged by tab(s) 120 forminga friction or interference fit between dental device adapter system 106 and dental handpiece 105 (see FIGS. 8 and 9). Alternatively, dental device adapter system 106 may include feature 124 for engaging notch interface 122 or bayonet style interface of DPA 102 (see FIGS. 8 and 9). Other suitable connection methods and/or connection mechanisms may be used as the second securing mechanism. For example, pads, ribs portions, threads, springs, buttons, temporary adhesive, and/or combinations thereof may secure dental device adapter system 106 to the dental handpiece.

Dental device adapter system 106 may include additional mechanisms for permanently or detachably securing dental device adapter system 106 to the DPA, securing dental device adapter system 106 to the dental handpiece, securing portions of dental device adapter system 106, securing dental device adapter system 106 to any other suitable apparatus, and/or securing combinations thereof. The additional securing mechanism may be any suitable alignment mechanism, geometric configuration, and/or other suitable securing mechanism. For example, the additional securing mechanism may be based upon adhesive, friction, threading, magnets, snap features, canted coil spring and matching groove, collets, dovetail interfacing, flaring, other suitable securing techniques, and/or their combination. In one embodiment, a cam (not shown) may be actuated by depressing a spring-loaded button. The cam can rotate thereby releasing dental device adapter system 106 from the DPA, the dental handpiece, and/or another suitable apparatus. Additionally or alternatively, the cam can rotate thereby separating the portions of the dental device adapter system 106.

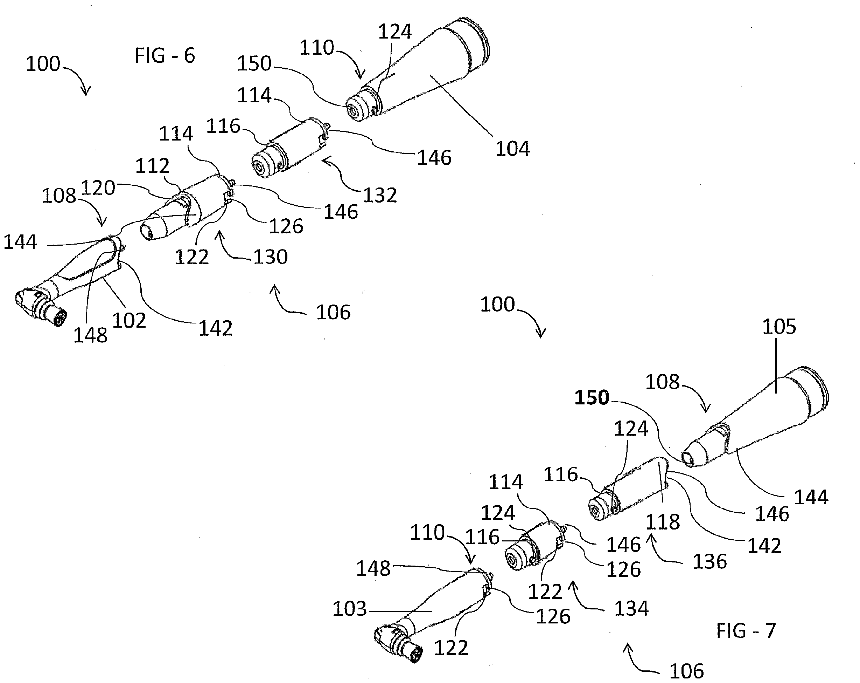

Referring to FIGS. 6 and 7, in one aspect disclosed herein, dental device adapter system 106 may include at least two adapters. Referring to FIG. 6, a first adapter 130 is configured to engage DPA 102 having first geometry 108 (the swoop-like shape). A second adapter 132 is configured to engage dental handpiece 104 having second geometry 110 (the ring-like shape). First adapter 130 and second adapter 132 may be permanently or releasably secured to one another by any suitable mechanism, thereby operably connecting DPA 102 to dental handpiece 104. Referring to FIG. 7, a first adapter 134 is configured to engage DPA 103 having second geometry 110 (the ring-like shape). A second adapter 136 is configured to engage dental handpiece 105 having first geometry 108 (the swoop-like shape). First adapter 134 and second adapter 136 may be permanently or releasably secured to one another by any suitable mechanism at an interface, thereby operably connecting DPA 103 to dental handpiece 105. As will be appreciated, a first adapter and a second adapter may likewise operably connect DPA 102 to dental handpiece 105 or DPA 103 to handpiece 104.

Referring to FIGS. 8 and 9, in one embodiment, dental device adapter system 106 includes at least three adapters. Referring to FIG. 8, dental device adapter system 106 may include first adapter 130 configured to engage DPA 102 having first geometry 108, second adapter 132 configured to engage dental handpiece 104 having second geometry 110, and a third adapter 138 configured to engage first adapter 130 and second adapter 132. Third adapter 138 may be secured permanently or releasably to first adapter 130 and/or second adapter 132, thereby operably connecting DPA 102 to dental handpiece 104. Referring to FIG. 9, dental device adapter system 106 may include first adapter 134 configured to engage DPA 103 having second geometry 110, second adapter 136 configured to engage dental handpiece 105 having first geometry 108, and a third adapter 140 configured to engage first adapter 134 and second adapter 136. Third adapter 140 may be secured permanently or releasably to first adapter 134 and/or second adapter 136, thereby operably connecting DPA 103 to dental handpiece 105. As will be appreciated, a third adapter may likewise engage the first adapters 130, 134 and the second adapters 132, 136 that operably connect DPA 102 to dental handpiece 105 or DPA 103 to handpiece 104.

Furthermore any suitable number of adapters may be included in dental device adapter system 106. For example, four, five, or more adapters may be included. In embodiments where adapters provide specific features, more adapters may be desirable. However, using more adapters requires more material cost and can increase risk of mechanical failure.

Other features may be provided by dental device adapter system 106. For example, dental device adapter system 106 may extend dental system 100 in a substantially axial direction. Alternatively, dental device adapter system 106 may extend dental system 100 in a direction other than a substantially axial direction For example, dental device adapter system 106 may extend dental system 100 in an angled orientation.

Dental device adapter system 106 may permit flexible manipulation of dental system 100 by dental device adapter system 106 including a flexible/elastomeric material and a flexible drive shaft.

While only certain features and embodiments of the invention have been shown and described, many modifications and changes may occur to those skilled in the art (for example, variations in sizes, dimensions, structures, shapes and proportions of the various elements, values of parameters (for example, temperatures, pressures, etc.), mounting arrangements, use of materials, colors, orientations, etc.) without materially departing from the novel teachings and advantages of the subject matter recited in the claims. The order or sequence of any process or method steps may be varied or resequenced according to alternative embodiments. It is, therefore, to be understood that the appended claims are intended to cover all such modifications. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A dental system (100), comprising:
(a) a dental prophylaxis angle (102, 103);
(b) a dental handpiece (104, 105); and
(c) a dental device adapter system (106),
**characterized in that** the dental device adapter system (106) comprises:
(i) a first adapter (130, 134) configured to detachably engage the dental prophylaxis angle (102, 103) having a first geometry (108) and a first rotatable component (146); and
(ii) a second adapter (132, 136) configured to detachably engage the dental handpiece (104, 105) having a second geometry (110) and a second rotatable component; and
wherein the first adapter (130, 134) being engaged with the dental prophylaxis angle (102, 103) and the second adapter (132, 136) being engaged with the dental handpiece (104, 105) permits rotation of the second rotatable component to rotate the first rotatable component (146) when the first adapter (130) and the second adapter (132) are releasably secured to one another at an interface, and whereby each adapter is capable of connecting a dental prophylaxis angle (102, 103) a dental handpiece (104, 105), and
wherein the adapter system (106) further comprising a third adapter (140, 138) configured to engage the first adapter (130, 134) and the second adapter (132, 136), wherein third adapter (140, 138) being engaged with the first adapter (130, 134) and the second adapter (132, 136) permits rotation of the second rotatable component to rotate the first rotatable component.

2. The dental system (100) of claim 1, wherein the dental device adapter system (106) extends the dental system (100) in a substantially axial direction.

3. The dental system (100) of claim 1, wherein the dental device adapter system (106) extends the dental system (100) in a direction other than a substantially axial direction.

4. The dental system (100) of claim 1, wherein the dental device adapter system (106) includes an elastomeric material permitting flexible manipulation of the dental system.

5. The dental system (100) of claim 1, wherein the rotatable component is a flexible drive shaft.

6. The dental system (100) of claim 1, wherein the first geometry includes at least two separate recesses.

7. The dental system (100) of claim 1, wherein the second geometry includes at least two separate recesses.

8. The dental system (100) of claim 1, wherein the first geometry includes a notch corresponding to a notch interface.

9. The dental system (100) of claim 1, wherein the second geometry includes a notch interface corresponding to a notch.

10. The dental system (100) of claim 1, wherein the first geometry is incompatible with the second geometry.

11. A method of operating a dental system (100) having
(a) a dental prophylaxis angle,
(b) a dental handpiece (104, 105), and a dental device adapter system, the method comprising:
providing the dental device adapter system, the dental device adapter system (106) comprising:
(i) a first adapter (130, 134) configured to detachably engage the dental prophylaxis angle having a first geometry and a first rotatable component; and
(ii) a second adapter (132, 136) configured to detachably engage the dental handpiece (104, 105) having a second geometry and a second rotatable component;
wherein the first adapter (130, 134) is engaged with the dental prophylaxis angle (102, 103) and the second adapter (132, 136) is engaged with the dental handpiece (104, 105); and
rotating the second rotatable component thereby rotating the first rotatable component) when the first adapter (130) and the second adapter (132) are releasably secured to one another at an interface, and whereby each adapter is capable of connecting a dental prophylaxis angle (102, 103) to a dental handpiece (104, 105), and
wherein the adapter system (106) further comprising a third adapter (140) configured to engage the first adapter (130, 134) and the second adapter (132, 136), wherein third adapter (140) being engaged with the first adapter (130, 134) and the second adapter (132, 136) permits rotation of the second rotatable component to rotate the first rotatable component.

12. A dental device adapter system (106) for a dental system (100) as defined in claim 1, comprising:
(i) a first adapter (130, 134) configured to engage a dental prophylaxis angle as a dental device having a first geometry and a first rotatable component; and
(ii) a second adapter (132, 136) configured to detachably engage a dental handpiece (104, 105) having a second geometry and a second rotatable component; and
(iii) a third adapter (140) configured to detachably engage the first adapter (130, 134) and the second adapter (132, 136),
wherein third adapter being engaged with the first adapter (130, 134) and the second adapter (132, 136) permits rotation of the second rotatable component to rotate the first rotatable component,
whereby each adapter is capable of connecting a dental prophylaxis angle (102, 103) to a dental handpiece (104, 105).

## Patentansprüche

1. Zahnärztliches System (100), umfassend:
(a) ein Zahnprophylaxe-Winkelstück (102, 103);
(b) ein zahnärztliches Handstück (104, 105); und
(c) ein Adaptersystem für zahnärztliche Vorrichtungen (106),
**dadurch gekennzeichnet, dass** das Adaptersystem für zahnärztliche Vorrichtungen (106) umfasst:
(i) einen ersten Adapter (130, 134), der so konfiguriert ist, dass er mit dem Zahnprophylaxe-Winkelstück (102, 103) mit einer ersten Geometrie (108) und einer ersten drehbaren Komponente (146) lösbar in Eingriff kommt; und
(ii) einen zweiten Adapter (132, 136), der so konfiguriert ist, dass er mit dem zahnärztlichen Handstück (104, 105) mit einer zweiten Geometrie (110) und einer zweiten drehbaren Komponente lösbar in Eingriff kommt; und
wobei der erste Adapter (130, 134) im Eingriff mit dem Zahnprophylaxe-Winkelstück (102, 103) und der zweite Adapter (132, 136) im Eingriff mit dem zahnärztlichen Handstück (104, 105) eine Drehung der zweiten drehbaren Komponente ermöglichen, um die erste drehbare Komponente (146) zu drehen, wenn der erste Adapter (130) und der zweite Adapter (132) an einer Schnittstelle lösbar aneinander befestigt sind, und wobei jeder Adapter in der Lage ist, ein Zahnprophylaxe-Winkelstück (102, 103) mit einem zahnärztlichen Handstück (104, 105) zu verbinden, und
wobei das Adaptersystem (106) ferner einen dritten Adapter (140, 138) umfasst, der so konfiguriert ist, dass er mit dem ersten Adapter (130, 134) und dem zweiten Adapter (132, 136) in Eingriff kommt, wobei der Eingriff des dritten Adapters (140, 138) mit dem ersten Adapter (130, 134) und dem zweiten Adapter (132, 136) eine Drehung der zweiten drehbaren Komponente ermöglicht, um die erste drehbare Komponente zu drehen.

2. Zahnärztliches System (100) nach Anspruch 1, wobei das Adaptersystem für zahnärztliche Vorrichtungen (106) das zahnärztliche System (100) in einer im Wesentlichen axialen Richtung erweitert.

3. Zahnärztliches System (100) nach Anspruch 1, wobei das Adaptersystem für zahnärztliche Vorrichtungen (106) das zahnärztliche System (100) in einer anderen als einer im Wesentlichen axialen Richtung erweitert.

4. Zahnärztliches System (100) nach Anspruch 1, wobei das Adaptersystem für zahnärztliche Vorrichtungen (106) ein elastomeres Material aufweist, das eine flexible Handhabung des zahnärztlichen Systems ermöglicht.

5. Zahnärztliches System (100) nach Anspruch 1, wobei die drehbare Komponente eine flexible Antriebswelle ist.

6. Zahnärztliches System (100) nach Anspruch 1, wobei die erste Geometrie zumindest zwei getrennte Aussparungen beinhaltet.

7. Zahnärztliches System (100) nach Anspruch 1, wobei die zweite Geometrie zumindest zwei getrennte Aussparungen beinhaltet.

8. Zahnärztliches System (100) nach Anspruch 1, wobei die erste Geometrie eine Kerbe beinhaltet, die einer Kerbenschnittstelle entspricht.

9. Zahnärztliches System (100) nach Anspruch 1, wobei die zweite Geometrie eine Kerbenschnittstelle beinhaltet, die einer Kerbe entspricht.

10. Zahnärztliches System (100) nach Anspruch 1, wobei die erste Geometrie mit der zweiten Geometrie inkompatibel ist.

11. Verfahren zum Betreiben eines zahnärztlichen Systems (100) mit
(a) einem Zahnprophylaxe-Winkelstück,
(b) einem zahnärztlichen Handstück (104, 105) und einem Adaptersystem für zahnärztliche Vorrichtungen, das Verfahren umfassend:
Bereitstellen des Adaptersystems für zahnärztliche Vorrichtungen, wobei das Adaptersystem für zahnärztliche Vorrichtungen (106) umfasst:
(i) einen ersten Adapter (130, 134), der so konfiguriert ist, dass er mit dem Zahnprophylaxe-Winkelstück mit einer ersten Geometrie und einer ersten drehbaren Komponente lösbar in Eingriff kommt; und
(ii) einen zweiten Adapter (132, 136), der so konfiguriert ist, dass er mit dem zahnärztlichen Handstück (104, 105) mit einer zweiten Geometrie und einer zweiten drehbaren Komponente lösbar in Eingriff kommt;
wobei der erste Adapter (130, 134) mit dem Zahnprophylaxe-Winkelstück (102, 103) in Eingriff steht und der zweite Adapter (132, 136) mit dem zahnärztlichen Handstück (104, 105) in Eingriff steht; und
Drehen der zweiten drehbaren Komponente, wodurch die erste drehbare Komponente gedreht wird, wenn der erste Adapter (130) und der zweite Adapter (132) an einer Schnittstelle lösbar aneinander befestigt sind, und wobei jeder Adapter in der Lage ist, ein Zahnprophylaxe-Winkelstück (102, 103) mit einem zahnärztlichen Handstück (104, 105) zu verbinden, und
wobei das Adaptersystem (106) ferner einen dritten Adapter (140) umfasst, der so konfiguriert ist, dass er mit dem ersten Adapter (130, 134) und dem zweiten Adapter (132, 136) in Eingriff kommt, wobei der Eingriff des dritten Adapters (140) mit dem ersten Adapter (130, 134) und dem zweiten Adapter (132, 136) eine Drehung der zweiten drehbaren Komponente ermöglicht, um die erste drehbare Komponente zu drehen.

12. Adaptersystem für zahnärztliche Vorrichtungen (106) für ein zahnärztliches System (100) nach Anspruch 1, umfassend:
(i) einen ersten Adapter (130, 134), der so konfiguriert ist, dass er mit einem Zahnprophylaxe-Winkelstück als zahnärztlicher Vorrichtung mit einer ersten Geometrie und einer ersten drehbaren Komponente in Eingriff kommt; und
(ii) einen zweiten Adapter (132, 136), der so konfiguriert ist, dass er mit einem zahnärztlichen Handstück (104, 105) mit einer zweiten Geometrie und einer zweiten drehbaren Komponente lösbar in Eingriff kommt; und
(iii) einen dritten Adapter (140), der so konfiguriert ist, dass er mit dem ersten Adapter (130, 134) und dem zweiten Adapter (132, 136) lösbar in Eingriff kommt,
wobei der Eingriff des dritten Adapters mit dem ersten Adapter (130, 134) und dem zweiten Adapter (132, 136) eine Drehung der zweiten drehbaren Komponente ermöglicht, um die erste drehbare Komponente zu drehen,
wobei jeder Adapter in der Lage ist, ein Zahnprophylaxe-Winkelstück (102, 103) mit einem zahnärztlichen Handstück (104, 105) zu verbinden.

## Revendications

1. Système dentaire (100), comprenant :
(a) un angle de prophylaxie dentaire (102, 103) ;
(b) une pièce à main dentaire (104, 105) ; et
(c) un système d'adaptateur de dispositif dentaire (106),
**caractérisé en ce que** le système d'adaptateur de dispositif dentaire (106) comprend :
(i) un premier adaptateur (130, 134) configuré pour mettre en prise de manière détachable l'angle de prophylaxie dentaire (102, 103) ayant une première géométrie (108) et un premier composant rotatif (146) ; et
(ii) un deuxième adaptateur (132, 136) configuré pour mettre en prise de manière détachable la pièce à main dentaire (104, 105) ayant une deuxième géométrie (110) et un deuxième composant rotatif ; et
dans lequel la mise en prise du premier adaptateur (130, 134) avec l'angle de prophylaxie dentaire (102, 103) et la mise en prise du deuxième adaptateur (132, 136) avec la pièce à main dentaire (104, 105) permettent une rotation du deuxième composant rotatif pour faire tourner le premier composant rotatif (146) lorsque le premier adaptateur (130) et le deuxième adaptateur (132) sont fixés de manière libérable l'un à l'autre au niveau d'une interface, et moyennant quoi chaque adaptateur est capable de relier un angle de prophylaxie dentaire (102, 103) à une pièce à main dentaire (104, 105), et
dans lequel le système d'adaptateur (106) comprend en outre un troisième adaptateur (140, 138) configuré pour mettre en prise le premier adaptateur (130, 134) et le deuxième adaptateur (132, 136), dans lequel la mise en prise du troisième adaptateur (140, 138) avec le premier adaptateur (130, 134) et le deuxième adaptateur (132, 136) permet une rotation du deuxième composant rotatif pour faire tourner le premier composant rotatif.

2. Système dentaire (100) selon la revendication 1, dans lequel le système d'adaptateur de dispositif dentaire (106) étend le système dentaire (100) dans une direction sensiblement axiale.

3. Système dentaire (100) selon la revendication 1, dans lequel le système d'adaptateur de dispositif dentaire (106) étend le système dentaire (100) dans une direction autre qu'une direction sensiblement axiale.

4. Système dentaire (100) selon la revendication 1, dans lequel le système d'adaptateur de dispositif dentaire (106) comporte un matériau élastomère permettant une manipulation flexible du système dentaire.

5. Système dentaire (100) selon la revendication 1, dans lequel le composant rotatif est un arbre d'entraînement flexible.

6. Système dentaire (100) selon la revendication 1, dans lequel la première géométrie comporte au moins deux évidements séparés.

7. Système dentaire (100) selon la revendication 1, dans lequel la deuxième géométrie comporte au moins deux évidements séparés.

8. Système dentaire (100) selon la revendication 1, dans lequel la première géométrie comporte une encoche correspondant à une interface d'encoche.

9. Système dentaire (100) selon la revendication 1, dans lequel la deuxième géométrie comporte une interface d'encoche correspondant à une encoche.

10. Système dentaire (100) selon la revendication 1, dans lequel la première géométrie est incompatible avec la deuxième géométrie.

11. Procédé de mise en fonctionnement d'un système dentaire (100) ayant
(a) un angle de prophylaxie dentaire,
(b) une pièce à main dentaire (104, 105), et un système d'adaptateur de dispositif dentaire, le procédé comprenant :
la fourniture du système d'adaptateur de dispositif dentaire, le système d'adaptateur de dispositif dentaire (106) comprenant :
(i) un premier adaptateur (130, 134) configuré pour mettre en prise de manière détachable l'angle de prophylaxie dentaire ayant une première géométrie et un premier composant rotatif ; et
(ii) un deuxième adaptateur (132, 136) configuré pour mettre en prise de manière détachable la pièce à main dentaire (104, 105) ayant une deuxième géométrie et un deuxième composant rotatif ;
dans lequel le premier adaptateur (130, 134) est mis en prise avec l'angle de prophylaxie dentaire (102, 103) et le deuxième adaptateur (132, 136) est mis en prise avec la pièce à main dentaire (104, 105) ; et
une rotation du deuxième composant rotatif faisant ainsi tourner le premier composant rotatif lorsque le premier adaptateur (130) et le deuxième adaptateur (132) sont fixés de manière libérable l'un à l'autre au niveau d'une interface, et moyennant quoi chaque adaptateur est capable de relier un angle de prophylaxie dentaire (102, 103) à une pièce à main dentaire (104, 105), et
dans lequel le système d'adaptateur (106) comprend en outre un troisième adaptateur (140) configuré pour mettre en prise le premier adaptateur (130, 134) et le deuxième adaptateur (132, 136), dans lequel la mise en prise du troisième adaptateur (140) avec le premier adaptateur (130, 134) et le deuxième adaptateur (132, 136) permet une rotation du deuxième composant rotatif pour faire tourner le premier composant rotatif.

12. Système d'adaptateur de dispositif dentaire (106) pour un système dentaire (100) selon la revendication 1, comprenant :
(i) un premier adaptateur (130, 134) configuré pour mettre en prise un angle de prophylaxie dentaire au niveau d'un dispositif dentaire ayant une première géométrie et un premier composant rotatif ; et
(ii) un deuxième adaptateur (132, 136) configuré pour mettre en prise de manière détachable une pièce à main dentaire (104, 105) ayant une deuxième géométrie et un deuxième composant rotatif ; et
(iii) un troisième adaptateur (140) configuré pour mettre en prise de manière détachable le premier adaptateur (130, 134) et le deuxième adaptateur (132, 136),
dans lequel la mise en prise du troisième adaptateur avec le premier adaptateur (130, 134) et le deuxième adaptateur (132, 136) permet une rotation du deuxième composant rotatif pour faire tourner le premier composant rotatif,
dans lequel chaque adaptateur est capable de relier un angle de prophylaxie dentaire (102, 103) à une pièce à main dentaire (104, 105).
